# EUROPÄISCHE PATENTSCHRIFT

(11) **EP 3 683 414 B1**
(45) Veröffentlichungstag und Bekanntmachung des Hinweises auf die Patenterteilung: **11.10.2023**
(21) Anmeldenummer: 20152810.6
(22) Anmeldetag: 21.01.2020
(51) Int. Cl.: F01N 3/10, F01N 3/20, F01N 13/00

(54) **ABGASANLAGE FÜR EINEN VERBRENNUNGSMOTOR UND VERFAHREN ZUM BETREIBEN DERSELBEN**
WASTE GAS SYSTEM FOR A COMBUSTION ENGINE AND METHOD FOR OPERATING THE SAME
INSTALLATION DE GAZ D'ÉCHAPPEMENT POUR UN MOTEUR À COMBUSTION INTERNE ET SON PROCÉDÉ DE FONCTIONNEMENT

(30) Priorität: 21.01.2019 DE 102019101394
(43) Veröffentlichungstag der Anmeldung: 22.07.2020
(73) Patentinhaber: VOLKSWAGEN AG, 38440 Wolfsburg (DE)
(72) Erfinder: Kaack, Michael, 38531 Rötgesbüttel (DE); Paukner, Stefan, 38442 Wolfsburg (DE); Baron von Ceumern-Lindenstjerna, Falk-Christian, 38124 Braunschweig (DE); Bozalp, Tolga, 13581 Berlin (DE)
(74) Vertreter: Gulde & Partner

(56) Entgegenhaltungen:
- DE-A1-102012 220 016
- DE-A1-102016 122 304
- DE-A1-102016 206 394
- DE-A1-102017 107 378
- DE-A1-102017 113 366

## Beschreibung

Die Erfindung betrifft eine Abgasanlage für einen Verbrennungsmotor sowie ein Verfahren zum Betreiben der Abgasanlage bei Vorliegen eines Niedrigtemperaturzustands zum Aufheizen von Abgasreinigungseinrichtungen der Abgasanlage.

Katalytische Abgasreinigungseinrichtungen, die in Abgasanlagen von Verbrennungsmotoren in Fahrzeugen eingesetzt werden, benötigen eine Betriebstemperatur, um wirksam zu sein. Die Betriebstemperatur ist insbesondere durch eine katalysatorspezifische Lightoff-Temperatur gekennzeichnet, mit der eine Temperatur definiert wird, ab der 50 % der eintretenden Emissionen konvertiert werden. Da katalytische Abgasreinigungseinrichtungen ihre Lightoff-Temperatur nach einem Kaltstart des Verbrennungsmotors in der Regel noch nicht aufweisen, sind verschiedene Abgastemperatur anhebende Maßnahmen bekannt, um ein schnelles Aufheizen zu erreichen. Hierzu zählen beispielsweise Zündwinkelspätverstellung, Sekundärluftzufuhr in Kombination mit einem unterstöchiometrischen Kraftstoff-Luft-Gemisch des Verbrennungsmotors, elektrische Beheizung, Kraftstoffspät- und -nacheinspritzung und die Installation von Brennern in den Abgasstrang. Diese Verfahren ermöglichen nur eine begrenzte Heizleistung und sind an bestimmte Betriebsbedingungen gebunden, die ihre Einsatzmöglichkeit einschränken.

Aus EP 2646 662 B1 ist eine Abgasanlage mit einem SCR-Katalysator bekannt, bei der stromauf eines Harnstoff-Injektors eine Bypass-Leitung vom Abgaskanal abzweigt, über die ein Teilstrom des Abgases in ein Teilvolumen des SCR-Katalysators mündet, welcher von dem übrigen Volumen des SCR-Katalysators getrennt ausgebildet ist. In der Bypass-Leitung ist eine Heizvorrichtung angeordnet, mit welcher der Teilstrom des Abgases vor Eintritt in den SCR-Katalysator erwärmt werden kann. Auf diese Weise kann in Teilvolumen des SCR-Katalysators ein schneller Light-Off erzielt werden. Die Heizvorrichtung kann als elektrischer Heizer, Brenner oder dergleichen ausgebildet sein.

US 9,784,157 B2 beschreibt eine Abgasanlage mit einem HC-SCR-Katalysator, der Stickoxide in Gegenwart eines stromauf des HC-SCR-Katalysators eingespritzten Kohlenwasserstoffs HC wie Diesel oder Benzin katalytisch umsetzt. Um den HC-SCR-Katalysator von Kohlenwasserstoffablagerungen zu regenerieren, ist ihm eine Heizeinrichtung zur Aufheizung des Abgasstroms vorgeschaltet. Die Heizeinrichtung kann als eine Kombination eines Dieseloxidationskatalysators (DOC) mit vorgeschalteter Kohlenwasserstoff-Einspritzung ausgebildet sein, sodass der eingespritzte Kohlenwasserstoff exotherm auf dem DOC verbrennt. Anstelle des DOC kann der eingespritzte Kohlenwasserstoff in einem im Abgaskanal angeordneten Brenner exotherm verbrannt werden. Gemäß noch einer weiteren Ausgestaltung ist die Heizeinrichtung in Form einer elektrischen Widerstandsheizung ausgebildet.

DE 10 2017 113 366 A1 offenbart ein Abgasnachbehandlungssystem für einen fremdgezündeten Verbrennungsmotor nach dem Ottoprinzip. Der Verbrennungsmotor ist auslassseitig mit einer Abgasanlage verbunden, wobei in der Abgasanlage in Strömungsrichtung eines Abgasstroms durch die Abgasanlage ein elektrisch beheizbarer Drei-Wege-Katalysator, stromabwärts des elektrisch beheizbaren Drei-Wege-Katalysators ein Vier-Wege-Katalysator und weiter stromabwärts ein weiterer Drei- Wege-Katalysator angeordnet sind. Vor einem Start des Verbrennungsmotors werden der elektrisch beheizbare Drei-Wege-Katalysator und vorzugsweise auch der Vier-Wege-Katalysator beheizt, um bereits ab dem Start des Verbrennungsmotors eine effiziente Abgasnachbehandlung der Rohemissionen des Verbrennungsmotors zu ermöglichen. Das Abgasnachbehandlungssystem ist ferner dazu eingerichtet, auch während einer Regeneration des Vier-Wege-Katalysators eine effiziente Umsetzung der Schadstoffe zu ermöglichen und somit in allen Betriebszuständen des Kraftfahrzeuges besonders niedrige Emissionen zu gewährleisten.

Aus der DE 10 2017 107 378 A1 ist ein Verfahren zum Aufheizen eines elektrisch beheizbaren Katalysators in einem Abgaskanal eines Kraftfahrzeuges mit einem Verbrennungsmotor bekannt. Um den Katalysator vor einem Start des Verbrennungsmotors aufzuheizen, ist vorgesehen, dass der Katalysator bereits vor dem Motorstart des Verbrennungsmotors elektrisch aufgeheizt wird und die Sauerstoffspeicherfähigkeit des elektrisch beheizbaren Katalysator befüllt wird. Somit ist bereits mit dem Motorstart des Verbrennungsmotors eine effiziente Abgasnachbehandlung ermöglicht. Dabei erfolgt nach einer elektrischen Vorheizphase nach dem Motorstart eine weitere Aufheizung des Katalysators durch eine kombinierte elektrische und chemische Aufheizung durch die exotherme Umsetzung von unverbrannten Kraftstoffkomponenten auf einer katalytisch wirksamen Oberfläche des elektrisch beheizbaren Katalysators.

Die DE 10 2016 206 394 A1 beschreibt ein Verfahren zur Abgasnachbehandlung eines Verbrennungsmotors mit einer zweiflutig ausgebildeten Abgasanlage, wobei beide Abgasfluten durch einen gemeinsamen Brenner beheizt werden können. In jeder der Abgasfluten sind ein erster und ein zweiter Katalysator angeordnet, wobei die Lambdaregelung des Verbrennungsmotors und/oder des Brenners zumindest während einer Aufheizphase der Abgasanlage durch eine stromabwärts des zweiten Katalysators angeordnete Lambdasonde erfolgt. Die Abgasanlage wird insbesondere nach einem Kaltstart des Verbrennungsmotors durch den Brenner erhitzt, um die Katalysatoren möglichst schnell auf eine Light-Off-Temperatur zu bringen und eine wirksame Konvertierung der Schadstoffe im Abgas zu ermöglichen.

Ferner ist aus der DE 10 2016 122 304 A1 ein Verfahren zum Aufheizen eines elektrisch beheizbaren Katalysators in einem Abgaskanal eines Kraftfahrzeuges mit einem Verbrennungsmotor bekannt. Um den Katalysator vor einem Start des Verbrennungsmotors aufzuheizen, ist vorgesehen, dass der Katalysator bereits vor dem Motorstart des Verbrennungsmotors elektrisch aufgeheizt wird und bereits mit dem Motorstart eine effiziente Abgasnachbehandlung ermöglicht. Dabei erfolgt nach einer elektrischen Vorheizphase nach dem Motorstart eine weitere Aufheizung des Katalysators durch eine kombinierte elektrische und chemische Aufheizung durch die exotherme Umsetzung von unverbrannten Kraftstoffkomponenten auf einer katalytisch wirksamen Oberfläche des elektrisch beheizbaren Katalysators.

Der Erfindung liegt nun die Aufgabe zugrunde, eine Abgasanlage zur Verfügung zu stellen, die ein schnelleres Erreichen der Betriebstemperaturen der Katalysatoren und dadurch eine Verminderung der Startemissionen ermöglicht.

Diese Aufgabe wird durch eine Abgasanlage für einen Verbrennungsmotor sowie ein Verfahren zum Betreiben von dieser mit den Merkmalen der unabhängigen Ansprüche gelöst. Weitere bevorzugte Ausgestaltungen der Erfindung ergeben sich aus den übrigen, in den Unteransprüchen genannten Merkmalen.

Die erfindungsgemäße Abgasanlage umfasst eine erste, von einem Abgas des Verbrennungsmotors durchströmbare Abgasreinigungseinrichtung und eine zweite, im Abgasströmungsweg stromab der ersten Abgasreinigungseinrichtung angeordnete, von dem Abgas durchströmbare Abgasreinigungseinrichtung. Die zweite Abgasreinigungseinrichtung weist eine elektrische Heizeinrichtung zur Erwärmung der zweiten Abgasreinigungseinrichtung auf. Die Abgasanlage umfasst ferner einen im Abgasströmungsweg stromab der ersten Abgasreinigungseinrichtung und stromauf der zweiten Abgasreinigungseinrichtung angeordneten Brenner, der eingerichtet ist, mit einem Brennstoff und einem oxidativen Gasstrom betrieben zu werden, um durch Verbrennung des Brennstoff den Gasstrom zu erwärmen und der zweiten Abgasreinigungseinrichtung zuzuführen.

Indem zur Beheizung der zweiten, relativ motorfern angeordneten Abgasreinigungseinrichtung eine Kombination von zwei Heizmaßnahmen vorgesehen ist, umfassend den Brenner und die elektrische Heizeinrichtung, ist eine sehr schnelle Aufheizung der zweiten Abgasreinigungseinrichtung möglich. Durch die elektrische Heizeinrichtung wird zumindest ein kleines Katalysatorvolumen sehr schnell aktiviert. Durch die exotherme Aktivität dieses kleinen Katalysatorvolumens kann dann das weitere Volumen zusammen mit der Brennerheizung emissionsarm mit hoher Heizleistung aufgeheizt und aktiviert werden. Durch die hohe additive Heizleistung kann die zweite Abgasreinigungseinrichtung auch bei großem Katalysatorvolumen sehr schnell auf ihre Lightoff-Temperatur aufgeheizt werden, sodass Startemissionen bei einem Kaltstart reduziert werden. Da diese Heizmaßnahmen außermotorisch, also unabhängig von der Betriebsweise des Verbrennungsmotors funktionieren, kann der Verbrennungsmotor in dieser Phase beliebig betrieben werden, beispielsweise auch mit hoher Anfahrtsdynamik. Dank der hohen Heizleistung kann die zweite Abgasreinigungseinrichtung trotz ihrer motorfernen Einbaulage, beispielsweise an einer Unterbodenposition des Fahrzeugs, und ihres relativ großen Volumens noch vor der ersten, motornahen Abgasreinigungseinrichtung ihre Lightoff-Temperatur erreichen und somit als erste die Konvertierungsleistung übernehmen. Zwar ist die durch die beiden Heizmaßnahmen verursachte thermische Belastung der zweiten Abgasreinigungseinrichtung vergleichsweise hoch, jedoch kann dies toleriert werden, da im regulären Fahrbetrieb auch bei hohen Lasten die thermische Belastung an der motorfernen Einbaulage gering ist. Somit wird die Alterungsstabilität der zweiten Abgasreinigungseinrichtung trotz des hohen Energieeintrags beim Kaltstart nicht signifikant beeinträchtigt. Zudem ist eine bedarfsgerechte Variation der Heizleistung auf die zweite Abgasreinigungseinrichtung möglich. Schließlich erlaubt der Brenner eine individuelle Einstellung der Verbrennungsluftverhältnisse (Lambdawert) über die zweite Abgasreinigungseinrichtung, die unabhängig von der motorischen Lambdaregelung über der ersten Abgasreinigungseinrichtung ist. Dies ermöglicht eine hohe Konvertierungsleistung beider Abgasreinigungseinrichtungen.

Dabei wird im Rahmen der vorliegenden Anmeldung unter dem Begriff Abgasreinigungseinrichtung eine Vorrichtung verstanden, die mindestens eine Abgaskomponente aus einem verbrennungsmotorischen Abgas zu vermindern vermag, sodass die Konzentration dieser Abgaskomponente in den in die Umgebung abgegebenen Emissionen reduziert ist. Insbesondere handelt es sich um eine chemisch-katalytische Umsetzung der betreffenden Abgaskomponente. Vorzugsweise umfasst die Abgasreinigungseinrichtung eine katalytisch aktive Komponente in Form einer katalytischen Beschichtung, die für ihre Funktion eine Mindesttemperatur (Lightoff-Temperatur) benötigt.

In bevorzugter Ausgestaltung der Erfindung ist vorgesehen, dass die erste Abgasreinigungseinrichtung an einer motornahen Position angeordnet ist, insbesondere so, dass eine Abgaslauflänge zwischen Zylinderauslass des Verbrennungsmotors und Eintrittsfläche der ersten Abgasreinigungseinrichtung höchstens 50 cm, insbesondere höchstens 40 cm, vorzugsweise höchstens 30 cm, beträgt. Durch eine derartige motornahe Anordnung, wird die Beaufschlagung der ersten Abgasreinigungseinrichtung mit sehr hohen Abgastemperaturen gewährleistet, sodass die erste Abgasreinigungseinrichtung nach einem Motorstart schnell auf ihre Lightoff-Temperatur aufgeheizt werden kann und dieses Temperaturniveau im weiteren Betrieb aufrechterhalten werden kann.

Vorzugsweise ist die zweite Abgasreinigungseinrichtung an einer motorfernen Unterbodenposition angeordnet, insbesondere so, dass eine Abgaslauflänge zwischen Zylinderauslass des Verbrennungsmotors und Eintrittsfläche in die zweite Abgasreinigungseinrichtung mindestens 80 cm, insbesondere mindestens 100 cm, bevorzugt mindestens 120 cm beträgt. Die Anordnung an einer Unterbodenposition hat den Vorteil, dass hier die verfügbaren Bauräume größer sind als im motornahen Motorraum, sodass auch große Katalysatorvolumina untergebracht werden können. Zudem ist aufgrund der geringeren Abgastemperaturen an dieser Position die thermische Belastung der zweiten Abgasreinigungseinrichtung und somit ihre Alterung reduziert. Üblicherweise weist somit die zweite Abgasreinigungseinrichtung ein größeres Volumen als die erste Abgasreinigungseinrichtung auf.

Gemäß einer Ausführung der Erfindung ist die erste Abgasreinigungseinrichtung ein Drei-Wege-Katalysator. Drei-Wege-Katalysatoren weisen eine katalytische Beschichtung auf, welche die Abgaskomponenten Kohlenwasserstoffe, Kohlenmonoxid sowie Stickoxide bei stöchiometrischer Abgaszusammensetzung mit einer hohen Konvertierungsrate zu konvertieren vermag. Drei-Wege-Katalysatoren sind daher bei Ottomotoren vorteilhaft. Alternativ ist die erste Abgasreinigungseinrichtung ein Vier-Wege-Katalysator. Hierunter versteht man einen Partikelfilter, insbesondere einen Ottopartikelfilter, der eine dreiwegekatalytische Beschichtung aufweist. Somit vermag der Vier-Wege-Katalysator zusätzlich zu den drei vorgenannten Abgaskomponenten auch Partikelemissionen zu verringern und ist ebenfalls für Ottomotoren geeignet.

Erfindungsgemäß ist auch die zweite Abgasreinigungseinrichtung ein Drei-Wege-Katalysator, der sich durch die gleichen katalytischen Eigenschaften und Vorzüge wie für die die erste Abgasreinigungseinrichtung beschrieben auszeichnet.

In weiterer bevorzugter Ausgestaltung der Erfindung ist vorgesehen, dass die Abgasanlage ferner eine stromauf der ersten Abgasreinigungseinrichtung angeordnete Messeinrichtung zur Messung eines Sauerstoffgehalts des Abgases und/oder eine stromab der ersten Abgasreinigungseinrichtung und stromab des Brenners angeordnete Messeinrichtung zur Messung eines Sauerstoffgehalts des Abgases umfasst, die vorzugsweise beide als Lambdasonden ausgebildet sind. Vorzugsweise sind beide Messeinrichtung vorgesehen. Durch die erste Messeinrichtung kann eine besonders schnelle Regelung des verbrennungsmotorischen Lambdawerts erfolgen. Die der ersten Abgasreinigungseinrichtung nachgeschaltete zweite Messeinrichtung dient einerseits der Funktionsüberwachung der ersten Abgasreinigungseinrichtung und andererseits ebenfalls der Regelung des verbrennungsmotorischen Lambdawerts

Gemäß weiterer bevorzugter Ausgestaltung umfasst die Abgasanlage ferner eine stromab des Brenners und stromauf der zweiten Abgasreinigungseinrichtung (also zwischen Brenner und zweiter Abgasreinigungseinrichtung) angeordnete dritte Messeinrichtung zur Messung eines Sauerstoffgehalts des Abgases und/oder eine stromab oder in der zweiten Abgasreinigungseinrichtung angeordnete Messeinrichtung zur Messung eines Sauerstoffgehalts des Abgases, die vorzugsweise beide als Lambdasonden ausgebildet sind. Vorzugsweise sind beide Messeinrichtung vorgesehen. Die dritte Messeinrichtung erlaubt eine präzise Lambdaregelung des brennerseitigen Lambdawerts. Die nach oder in der zweiten Abgasreinigungseinrichtung angeordnete vierte Messeinrichtung dient der Funktionsüberwachung der zweiten Abgasreinigungseinrichtung.

Neben der ersten oder zweiten Abgasreinigungseinrichtung können weitere, katalytische der mechanischen Abgasreinigungskomponenten in der Abgasanlage verbaut sein. Insbesondere kann die Abgasanlage einen Partikelfilter, insbesondere Ottopartikelfilter, umfassen, der stromab der ersten oder der zweiten Abgasreinigungseinrichtung angeordnet ist. Hierdurch wird eine Reduzierung von Partikelemissionen erzielt. Erfindungsgemäß ist stromab der zweiten Abgasreinigungseinrichtung ein Vier-Wege-Katalysator angeordnet, der eine katalytische Verminderung von Kohlenwasserstoffen, Kohlenmonoxid und Stickoxiden sowie eine mechanische Zurückhaltung von Partikeln vornimmt. Hierdurch kann das Volumen der vorgeschalteten zweiten Abgasreinigungseinrichtung klein gegenüber dem nachgeschalteten Vier-Wege-Katalysator gewählt werden, sodass die zweite Abgasreinigungseinrichtung noch schneller auf Betriebstemperatur geheizt werden kann.

In einem weiteren Aspekt sieht die Erfindung ein Verfahren zum Betreiben der erfindungsgemäßen Abgasanlage bei Vorliegen eines Niedrigtemperaturzustands vor, also beispielsweise nach einem Kaltstart des Verbrennungsmotors, wenn die erste und/oder zweite Abgasreinigungseinrichtung ihre Betriebstemperatur noch nicht aufweisen. Das Verfahren umfasst die Schritte: Betreiben des Verbrennungsmotors mit einer innermotorischen Maßnahme zur Anhebung der Abgastemperatur; und Aktivieren des Brenners und der elektrischen Heizeinrichtung der zweiten Abgasreinigungseinrichtung, wobei der Verbrennungsmotor und der Brenner jeweils mit einem Lambdawert derart betrieben werden, dass ein in die zweite Abgasreinigungseinrichtung eintretendes Mischgas aus verbrennungsmotorischen Abgas und Brennerabgas stöchiometrisch mit λₘ = 1 ist.

Durch die innermotorische Heizmaßnahme wird in erster Linie die erste Abgasreinigungseinrichtung auf Betriebstemperatur gebracht. Die beiden außermotorischen Heizmaßnahmen dienen der schnellen Aufheizung der zweiten Abgasreinigungseinrichtung. Dabei können die innermotorische Heizmaßnahme und die beiden außermotorischen Heizmaßnahmen gleichzeitig oder in beliebiger Reihenfolge zeitlich versetzt begonnen werden. Insbesondere kann die elektrische Beheizung der zweiten Abgasreinigungseinrichtung mit einem gewissen zeitlichen Versatz begonnen werden, ehe der Brenner aktiviert wird. Auf diese Weise wird sichergestellt, dass die Brenneremissionen auf einem durch die elektrische Beheizung aktivierten Teilvolumen der zweiten Abgasreinigungseinrichtung umgesetzt werden.

Durch die Einstellung des stöchiometrischen Mischgases wird eine weitestgehend vollständige Umsetzung der relevanten Abgaskomponenten gewährleistet. Dieses kann auf zwei alternativen Ansätzen erfolgen.

In einer ersten Variante werden sowohl der Verbrennungsmotor (insbesondere unmittelbar ab Motorstart) mit einem stöchiometrischen Lambdawert mit λₑ = 1 als auch der Brenner mit einem stöchiometrischen Lambdawert mit λ_{b} = 1 betrieben. Hierdurch wird eine optimale katalytische Konvertierungsleistung auf beiden Abgasreinigungseinrichtungen erzielt.

Alternativ werden der Verbrennungsmotor mit einem leicht fetten Lambdawert mit λₑ < 1 und der Brenner mit einem leicht mageren Lambdawert mit λ_{b} < 1 derart betrieben, dass das Mischgas stöchiometrisch mit λₘ = 1 ist. Dies hat den Vorteil, dass die Partikelemissionen des Brenners bei dem leicht mageren Betrieb vermindert sind und dass der erhöhte Gehalt an CO und HC im Abgas zu einer weiteren Beschleunigung des Aufheizens der zweiten Abgasreinigungseinrichtung führt.

Die innermotorische Heizmaßnahme zur Anhebung der Abgastemperatur kann beispielsweise eine Verstellung des Zündwinkels in Richtung spät umfassen, wodurch der Wirkungsgrad des Motors reduziert und die Abgastemperatur erhöht wird. Ferner kann eine Verzögerung der Kraftstoffeinspritzung oder zusätzliche Kraftstoffeinspritzung nach den oberen Zünd-OT erfolgen, oder eine Abgasrückführrate verstellt, insbesondere vermindert werden.

Vorzugsweise wird die jeweilige Heizmaßnahme beendet, wenn die jeweilige Abgasreinigungseinrichtung ihre Betriebstemperatur erreicht hat.

Die Durchführung des Verfahrens erfolgt insbesondere durch eine elektronische Steuereinrichtung, die einen entsprechenden Algorithmus in computerlesbarer Form enthält sowie entsprechende Kennfelder etc.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: einen Verbrennungsmotor mit einer Abgasanlage gemäß einer nicht zur Erfindung gehörenden Ausgestaltung;
- Figur 2: einen Verbrennungsmotor mit einer Abgasanlage gemäß einer zweiten nicht zur Erfindung gehörenden Ausgestaltung;
- Figur 3: einen Verbrennungsmotor mit einer Abgasanlage gemäß einer dritten nicht zur Erfindung gehörenden Ausgestaltung;
- Figur 4: einen Verbrennungsmotor mit einer Abgasanlage gemäß einer weiteren nicht zur Erfindung gehörenden Ausgestaltung;
- Figur 5: einen Verbrennungsmotor mit einer Abgasanlage gemäß einer fünften nicht zur Erfindung gehörenden Ausgestaltung;
- Figur 6: einen Verbrennungsmotor mit einer Abgasanlage gemäß einer bevorzugten Ausgestaltung der Erfindung; und
- Figur 7: einen Verbrennungsmotor mit einer Abgasanlage gemäß einer weiteren nicht zur Erfindung gehörenden Ausgestaltung.

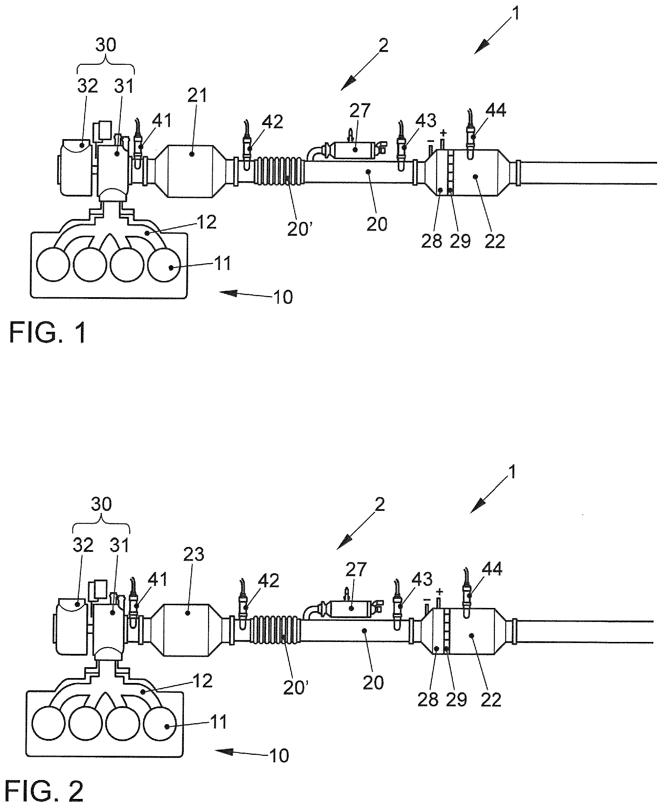

Figur 1 zeigt von einem insgesamt mit 1 bezeichneten Kraftfahrzeug lediglich einen Verbrennungsmotor 10 mit daran angeschlossener, nicht zur Erfindung gehörenden Abgasanlage 2.

Der Verbrennungsmotor 10 ist hier ein fremdgezündeter, mit Benzin betreibbarer Ottomotor, der beispielsweise vier Zylinder 11 aufweist. Die Abgase der Zylinder 11 werden in einem Abgaskrümmer 12 zusammen- und der Abgasanlage 2 zugeführt, wo sie zunächst eine Abgasturbine 31 eines Abgasturboladers 30 durchströmen, um einen Verdichter 32 des Abgasturboladers 30 anzutreiben, der in einem hier nicht weiter dargestellten Luftversorgungstrakt des Verbrennungsmotors 10 angeordnet ist. Von der Turbine 31 strömt das Abgas in einen Abgaskanal 20 der Abgasanlage 2.

Die Abgasanlage 2 umfasst den Abgaskanal 20, der über einen motornahen Abschnitt und einen Unterbodenabschnitt verfügt, die mit einem Anschlussstück 20` miteinander verbunden sind. In dem motornahen Abschnitt des Abgaskanals 20 ist eine erste Abgasreinigungseinrichtung 21 angeordnet, die als Drei-Wege-Katalysator ausgeführt ist. Die erste Abgasreinigungseinrichtung 23 weist vorzugsweise einen Metallträger auf, der eine dreiwegekatalytische Beschichtung aufweist, die unverbrannte Kohlenwasserstoffe HC und Kohlenmonoxid CO mit Stickoxiden NOₓ katalytisch umsetzt und somit diese drei Abgaskomponenten im Abgas reduziert. Eine eintrittsseitige Stirnseite des Metallträgers ist dabei höchstens 50 cm von den Gasauslässen der Zylinder 11 beabstandet gemessen als Abgaslauflänge.

In dem Unterbodenabschnitt des Abgaskanals 20 ist eine zweite Abgasreinigungseinrichtung 22 angeordnet, die ebenfalls als Drei-Wege-Katalysator ausgeführt ist. Die zweite Abgasreinigungseinrichtung 22 weist ein Substrat auf, das vorzugsweise als Keramikmonolith ausgebildet ist, der eine drei-wege-katalytische Beschichtung ähnlich oder gleich der ersten Abgasreinigungseinrichtung 21 aufweist. Die zweite Abgasreinigungseinrichtung 22 weist eine elektrische Heizeinrichtung 28 auf, die im dargestellten Beispiel als eine vom Abgas durchströmbare Heizscheibe ausgebildet ist, die flächig an der eintrittsseitigen Stirnseite des Substrats der Abgasreinigungseinrichtung 22 angeordnet ist und elektrisch aufheizbar ist. Die Heizscheibe 28 ist über Stützstifte 29 mit dem Substrat der Abgasreinigungseinrichtung 22 verbunden. Optional kann ein katalytisch beschichtetes oder unbeschichtetes Stützsubstrat zwischen Heizscheibe 28 und dem Substrat 22 angeordnet sein. Die eintrittsseitige Stirnseite des Substrats der zweiten Abgasreinigungseinrichtung 22 ist dabei mindestens 80 cm von den Gasauslässen der Zylinder 11 beabstandet gemessen als Abgaslauflänge. Aufgrund ihrer Anordnung an einer Unterbodenposition des Fahrzeugs 1 wird die zweite Abgasreinigungseinrichtung 22 auch als Unterbodenkatalysator bezeichnet.

Die Abgasanlage 2 weist ferner einen Brenner 27 auf, der stromab der ersten Abgasreinigungseinrichtung 21 und stromauf der zweiten Abgasreinigungseinrichtung 22 angeordnet ist. Der Brenner 27 ist mit einem Brennstoff und mit einem oxidativem Gasstrom betreibbar, wobei der Brennstoff oxidativ und exotherm mit dem Gasstrom verbrannt und der Gasstrom somit erwärmt wird. Der erwärmte Gasstrom verlässt den Brenner 27 als Brennerabgas und wird in den Abgaskanal 20 stromauf der zweiten Abgasreinigungseinrichtung 22 eingeleitet und dieser zugeführt. Im dargestellten Beispiel handelt es sich bei dem oxidativen Gasstrom um sauerstoffhaltige Luft, die aus der Umgebung angesaugt wird. Der Brennstoff kann ein beliebiger brennbarer Kohlenwasserstoff, wie Benzin, Diesel, Ethan, Methan, Propan, Butan, etc. sein, oder Wasserstoff oder eine Mischung von diesen. Aus Gründen der Praktikabilität wird als Brennstoff für den Brenner 27 der Kraftstoff verwendet, mit dem der Verbrennungsmotor 10 betrieben wird. Dank des Brenners 27 und der elektrischen Heizeinrichtung 28 kann die zweite Abgasreinigungseinrichtung 22 somit wahlweise durch den Brenner 27 oder der elektrischen Heizeinrichtung 28 oder gleichzeitig mit beiden beheizt werden.

Die Abgasanlage 2 weist ferner verschiedene Messeinrichtungen zur Messung des Sauerstoffgehalts des Abgases auf, die insbesondere als Lambdasonden ausgeführt und an verschiedenen Positionen des Abgaskanals 20 angeordnet sein können. Eine erste Lambdasonde 41 ist stromab der Turbine 31 und stromauf der ersten Abgasreinigungseinrichtung 21 angeordnet und ist vorzugsweise als Breitbandlambdasonde ausgeführt, um den Lambdawert über einen weiten Bereich genau bestimmen und das motorische Verbrennungslambda regeln zu können. Eine zweite, vorzugsweise als Sprunglambdasonde (Nernstsonde) ausgeführte Lambdasonde 42 ist stromab der ersten Abgasreinigungseinrichtung 21 und stromauf des Brenners 27 angeordnet. Eine optionale dritte, vorzugsweise als Sprunglambdasonde ausgeführte Lambdasonde 43 ist stromab des Brenners 27 und stromauf der zweiten Abgasreinigungseinrichtung 22 angeordnet und erlaubt die Regelung des Verbrennungslambdas des Brenners 27. Eine vierte Lambdasonde 44 ist im vorliegenden Beispiel innerhalb der zweiten Abgasreinigungseinrichtung 22 angeordnet, kann jedoch auch stromab der zweiten Abgasreinigungseinrichtung 22 angeordnet sein.

Die in Figur 1 gezeigte Abgasanlage 2 wird vorzugsweise wie folgt betrieben, um die Abgasreinigungseinrichtungen 21, 22 beispielsweise nach einem Motorstart möglichst schnell auf Betriebstemperatur zu bringen. Die in den Figuren 2 bis 7 dargestellten Abgasanlagen 2 werden entsprechend betrieben.

Zunächst wird festgestellt, ob ein Aufheizen der Abgasreinigungseinrichtungen 21, 22 erforderlich ist. Dies kann einerseits durch Messung der Temperatur mittels geeigneter Temperatursensoren erfolgen, die beispielsweise an den Katalysatorsubstraten angeordnet sind, wobei insbesondere die Messung der Temperatur der ersten Abgasreinigungseinrichtung 21 ausreichend sein kann. Alternativ können die Temperaturen abgeschätzt werden, beispielsweise mittels Erfassen der Außentemperatur und/oder Dauer einer Abstellzeit des Verbrennungsmotors 10. Liegt die festgestellte Temperatur unterhalb einer Grenztemperatur, die insbesondere einer Lightoff-Temperatur der ersten und/oder zweiten Abgasreinigungseinrichtung 21, 22 entspricht, wird das Vorliegen eines Niedrigtemperaturzustands festgestellt.

Liegt ein Niedrigtemperaturzustand vor, erfolgt ein Heizbetrieb zur Aufheizung der ersten und zweiten Abgasreinigungseinrichtung 21, 22. Hierzu wird der Verbrennungsmotor 10 mit zumindest einer innermotorischen Maßnahme zur Anhebung der Abgastemperatur gegenüber einem Normalbetrieb betrieben. Die zumindest eine innermotorische Maßnahme umfasst etwa eine Zündwinkelspätverstellung gegenüber einem Standardzündwinkel, welcher beispielsweise ein wirkungsgradoptimaler Zündwinkel ist, eine Kraftstoffspäteinspritzung nach ZOT oder dergleichen. Durch die hierdurch induzierte Anhebung der Abgastemperatur kommt es zu einem raschen Anstieg der Temperatur der ersten Abgasreinigungseinrichtung 21.

Gleichzeitig mit oder zeitversetzt zu der innermotorischen Maßnahme zur Anhebung der Abgastemperatur erfolgt ein Aktivieren der außermotorischen Heizmaßnahmen. Hierzu wird der Brenner 27 in Betrieb genommen, indem dieser mit Luft und Brennstoff versorgt wird, sodass die Luft aufgeheizt wird. Die so aufgeheizte Luft wird stromauf der zweiten Abgasreinigungseinrichtung 22 in den Abgaskanal 20 geleitet und vermischt sich mit dem Abgas, das die erste Abgasreinigungseinrichtung 21 durchströmt hat und tritt in die zweite Abgasreinigungseinrichtung 22. Gleichzeitig mit dem Betrieb des Brenners 27 wird die elektrische Heizeinrichtung 28 der zweiten Abgasreinigungseinrichtung 22 aktiviert. Durch den parallelen Betrieb des Brenners 27 und der elektrischen Heizeinrichtung 28 wird ein sehr schnelles Aufheizen der zweiten Abgasreinigungseinrichtung 22 erzielt.

Während der inner- und außermotorischen Heizmaßnahmen werden der Verbrennungsmotor 10 und der Brenner 27 derart betrieben, dass ein in die zweite Abgasreinigungseinrichtung 22 eintretendes Mischgas stöchiometrisch mit λₘ = 1 als Sollgröße ist. Hierdurch wird eine optimale katalytische Konvertierungsleistung von HC, CO und NOₓ im hinteren Drei-Wege-Katalysator 22 unmittelbar bei Erreichen seiner Lightoff-Temperatur erreicht.

Um ein stöchiometrisches Mischgas mit λₘ = 1 zu erreichen, werden in einer ersten Ausgestaltung des Verfahrens sowohl der Verbrennungsmotor 10 mit einem stöchiometrischen Luft-Kraftstoffgemisch mit λₑ = 1 (Sollgröße) als auch der Brenner 27 mit einem stöchiometrischen Luft-Kraftstoffgemisch λ_{b} = 1 (Sollgröße) betrieben. Hierdurch werden beide Abgasreinigungseinrichtungen 21, 22 mit einem stöchiometrischen Abgas beaufschlagt, sodass beide unmittelbar nach ihrer Aktivierung eine optimale Konvertierungsleistung bringen. Das verbrennungsmotorische Luft-Kraftstoffgemisch λₑ wird über einen ersten Lambdaregelkreis mittels der ersten Lambdasonde 41 geregelt. Das Luft-Kraftstoffgemisch λ_{b} des Brenners 27 wird über einen zweiten, separaten Lambdaregelkreis mittels der dritten (oder vierten) Lambdasonde 42 und 43 (oder 44) geregelt.

Gemäß einer zweiten Ausgestaltung des Verfahrens wird der Verbrennungsmotor 10 leicht fett, beispielsweise mit λₑ = 0,9, und der Brenner 27 leicht mager derart betrieben, dass das in die zweite Abgasreinigungseinrichtung 22 eintretende Mischgas stöchiometrisch mit λₘ = 1 geregelt wird. Hieraus ergibt sich der Vorteil, dass die im leicht fetten verbrennungsmotorischen Abgas vermehrt vorliegenden Komponenten HC und CO exotherm auf der zweiten Abgasreinigungseinrichtung 22 umgesetzt werden und somit zu einem noch schnelleren Erwärmen der zweiten Abgasreinigungseinrichtung 22 führen. (Aufgrund der nicht stöchiometrisch in die motornahe Abgasreinigungseinrichtung 21 eintretenden Abgaszusammensetzung erfolgt in der motornahen Abgasreinigungseinrichtung 21 kaum eine Konvertierung von HC und CO). Ferner werden in der zweiten Ausgestaltung des Verfahrens die Partikelgesamtemissionen (gemessen als Partikelanzahl PN) reduziert, da der Brenner 27 bei leicht magerem Betrieb gegenüber stöchiometrischem Betrieb weniger Partikel emittiert. Nachteilig an diesem Verfahren kann jedoch die Bildung von Ammoniak in der ersten Abgasreinigungseinrichtung 21 unter den leicht fetten Bedingungen sein, was zu erhöhten Stickoxidemissionen in der Startphase führen kann.

Figur 2 zeigt ein Fahrzeug 1 mit Verbrennungsmotor 10 und daran angeschlossener Abgasanlage 2 nach einer nicht zur Erfindung gehörenden zweiten Ausgestaltung, wobei gleiche Bauteile mit den gleichen Bezugszeichen wie in Figur 1 bezeichnet sind und nicht nochmals erläutert werden. Die in Figur 2 gezeigte Abgasanlage 2 unterscheidet sich von Figur 1 dadurch, dass die erste Abgasreinigungseinrichtung als ein Vier-Wege-Katalysator 23 ausgebildet ist. Hierbei handelt es sich um einen Partikelfilter, insbesondere Ottopartikelfilter, zum mechanischen Zurückhalten partikulärer Abgasbestandteile, dessen Filtersubstrat eine dreiwegekatalytische Beschichtung aufweist. Auf diese Weise vermag der Vier-Wege-Katalysator 23 die vier Abgasbestandteile unverbrannte Kohlenwasserstoffe HC, Kohlenmonoxid CO, Stickoxide NOₓ sowie Partikelemissionen im Abgas zu reduzieren.

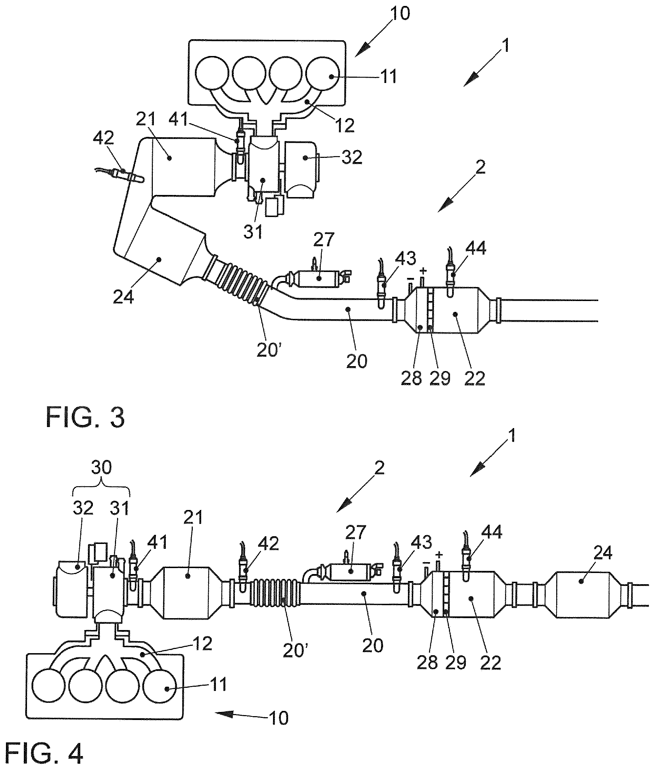

Figur 3 zeigt ein Fahrzeug 1 mit Verbrennungsmotor 10 und daran angeschlossener Abgasanlage 2 nach einer nicht zur Erfindung gehörenden dritten Ausgestaltung, wobei gleiche Bauteile mit den gleichen Bezugszeichen wie in Figur 1 bezeichnet sind und nicht nochmals erläutert werden. Die in Figur 3 gezeigte Abgasanlage 2 unterscheidet sich von Figur 1 dadurch, dass stromab der ersten Abgasreinigungseinrichtung (Drei-Wege-Katalysator) 21 ein motornaher Ottopartikelfilter 24 nachgeschaltet ist, wobei Drei-Wege-Katalysator 21 und Ottopartikelfilter 24 insbesondere an einem gemeinsamen Katalysatorgehäuse angeordnet sind. Der Drei-Wege-Katalysator 21 entspricht im Wesentlichen dem aus Figur 1. Bei dem Ottopartikelfilter 24 handelt es sich um einen reinen Partikelfilter zum mechanischen Zurückhalten partikulärer Abgasbestandteile ohne katalytische Beschichtung. Auf diese Weise vermag die Kombination aus erster Abgasreinigungseinrichtung 21 und Partikelfilter 24 ähnlich wie der Vier-Wege-Katalysator 23 nach Figur 2 die vier Abgasbestandteile unverbrannte Kohlenwasserstoffe HC, Kohlenmonoxid CO, Stickoxide NOₓ sowie Partikelemissionen im Abgas zu reduzieren. Die Variante hat den Vorteil, dass der Drei-Wege-Katalysator 21 ein Metallsubstrat umfassen kann und somit eine höhere Temperaturstabilität aufweist. Allerdings ist der Bauraumbedarf gegenüber der Ausführung aus Figur 2 größer. Eine vergleichsweise platzsparende Anordnung wird jedoch ermöglicht, indem das gemeinsame Katalysatorgehäuse geknickt ausgeführt ist, sodass die Abgasströmungsrichtung sich zwischen den beiden Komponenten 21, 24 ändert.

Figur 4 zeigt ein Fahrzeug 1 mit Verbrennungsmotor 10 und daran angeschlossener Abgasanlage 2 nach einer nicht zur Erfindung gehörenden vierten Ausgestaltung, wobei gleiche Bauteile mit den gleichen Bezugszeichen wie in Figur 1 bezeichnet sind und nicht nochmals erläutert werden. Die in Figur 4 gezeigte Abgasanlage 2 unterscheidet sich von Figur 1 dadurch, dass stromab der elektrisch beheizten Abgasreinigungseinrichtung 22 an einer Unterbodenposition ein unbeschichteter Partikelfilter 24 zum mechanischen Zurückhalten partikulärer Abgasbestandteile, insbesondere Ottopartikelfilter, angeordnet ist. Somit vermag die Abgasanlage 2 gemäß Figur 4 die vier Abgasbestandteile unverbrannte Kohlenwasserstoffe HC, Kohlenmonoxid CO, Stickoxide NOₓ sowie Partikelemissionen im Abgas zu reduzieren. Da im Unterbodenbereich vergleichsweise mehr Bauraum als in Motornähe vorhanden ist, lässt sich die Unterbringung des Partikelfilters 24 oder anderer Komponenten dort häufig einfacher realisieren als im Motorraum (wie etwa in Figur 3 dargestellt).

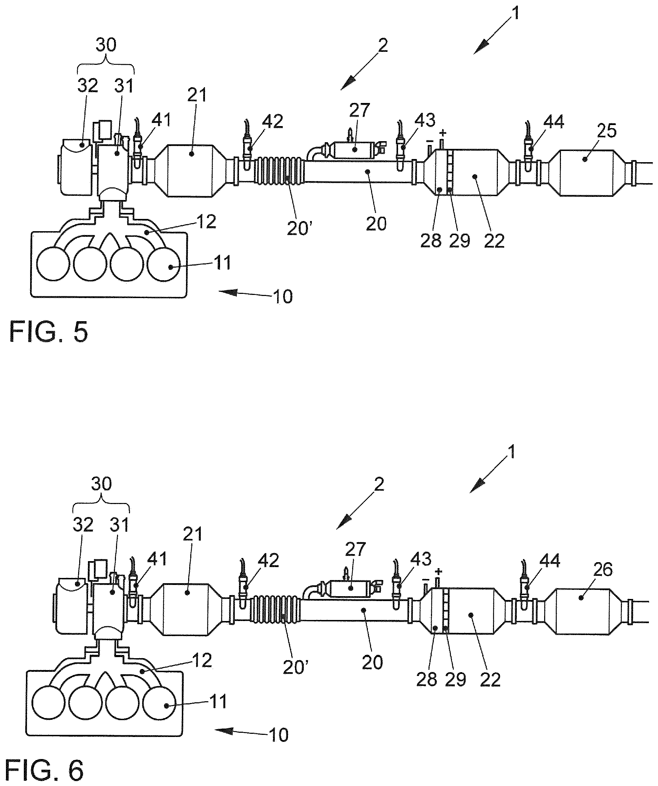

Figur 5 zeigt ein Fahrzeug 1 mit Verbrennungsmotor 10 und daran angeschlossener Abgasanlage 2 nach einer nicht zur Erfindung gehörenden fünften Ausgestaltung, wobei gleiche Bauteile mit den gleichen Bezugszeichen wie in Figur 1 bezeichnet sind und nicht nochmals erläutert werden. Die in Figur 5 gezeigte Abgasanlage 2 unterscheidet sich von Figur 1 dadurch, dass stromab der elektrisch beheizten Abgasreinigungseinrichtung 22 an einer Unterbodenposition des Fahrzeugs ein weiterer Drei-Wege-Katalysator 25 zur Konvertierung von HC, CO und NOₓ angeordnet ist. Ferner ist die vierte Lambdasonde 44 statt in der beheizten Abgasreinigungseinrichtung 22 stromab von dieser und vor dem hintersten Drei-Wege-Katalysator 25 angeordnet. Die Ausführung gemäß Figur 5 ermöglicht eine extrem hohe Konvertierungsleistung und -stabilität auch bei hohen Lasten und hohen Raumgeschwindigkeiten des Abgasstroms.

Figur 6 zeigt ein Fahrzeug 1 mit Verbrennungsmotor 10 und daran angeschlossener Abgasanlage 2 nach einer erfindungsgemäßen Ausgestaltung, wobei gleiche Bauteile mit den gleichen Bezugszeichen wie in Figur 1 bezeichnet sind und nicht nochmals erläutert werden. Die in Figur 6 gezeigte Abgasanlage 2 unterscheidet sich von Figur 1 dadurch, dass stromab der elektrisch beheizten Abgasreinigungseinrichtung 22 an einer Unterbodenposition des Fahrzeugs ein Vier-Wege-Katalysator 26, das heißt ein dreiwegekatalytisch beschichteter Partikelfilter zur Konvertierung von HC, CO und NOₓ sowie zur Zurückhaltung von Partikeln, angeordnet ist. Ferner ist die vierte Lambdasonde 44 wie in Figur 5 statt in der beheizten Abgasreinigungseinrichtung 22 stromab von dieser und vor dem hintersten Vier-Wege-Katalysator 25 angeordnet. Die Ausführung gemäß Figur 6 ermöglicht neben der hohen Konvertierungsleistung und -stabilität auch die Reduzierung von Partikelemissionen.

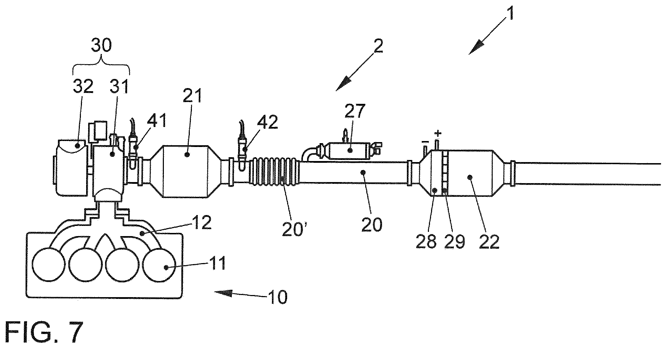

Figur 7 zeigt ein Fahrzeug 1 mit Verbrennungsmotor 10 und daran angeschlossener Abgasanlage 2 nach einer nicht zur Erfindung gehörenden siebten Ausgestaltung, wobei gleiche Bauteile mit den gleichen Bezugszeichen wie in Figur 1 bezeichnet sind und nicht nochmals erläutert werden. Die in Figur 7 gezeigte Abgasanlage 2 unterscheidet sich von Figur 1 durch Verzicht auf die dritte, der beheizten Abgasreinigungseinrichtung 22 vorgeschalteten Lambdasonde 43. Somit ist diese Ausführung mit geringeren Kosten verbunden, nimmt jedoch einen geringere Regelungsdynamik in Kauf.

Verschiedene Aspekte der vorstehend beispielhaft beschriebenen Ausführungsformen können auch miteinander kombiniert werden. So können in sämtlichen Ausführungen Auswahl und Anordnung der Lambdasonden variiert werden, beispielsweise auf die dritte Lambdasonde 43, wie in Figur 7 gezeigt, verzichtet werden.

### Bezugszeichenliste

- 1: Fahrzeug
- 10: Verbrennungsmotor, Ottomotor
- 11: Zylinder
- 12: Abgaskrümmer
- 2: Abgasanlage
- 20: Abgaskanal
- 20`: Anschlussstück
- 21: erste Abgasreinigungseinrichtung, Drei-Wege-Katalysator
- 22: zweite Abgasreinigungseinrichtung, Drei-Wege-Katalysator
- 23: erste Abgasreinigungseinrichtung, Vier-Wege-Katalysator
- 24: Ottopartikelfilter
- 25: Drei-Wege-Katalysator
- 26: Vier-Wege-Katalysator
- 27: Brenner
- 28: elektrische Heizeinrichtung, Heizscheibe
- 29: Stützstifte
- 30: Abgasturbolader (ATL)
- 31: Abgasturbine
- 32: Verdichter
- 41: Messeinrichtung zur Messung eines Sauerstoffgehalts des Abgases, Lambdasonde
- 42: Messeinrichtung zur Messung eines Sauerstoffgehalts des Abgases, Lambdasonde
- 43: Messeinrichtung zur Messung eines Sauerstoffgehalts des Abgases, Lambdasonde
- 44: Messeinrichtung zur Messung eines Sauerstoffgehalts des Abgases, Lambdasonde

- λₑ: Lambdawert Verbrennungsmotor, verbrennungsmotorischer Lambdawert
- λ_{b}: Lambdawert Brenner
- λₘ: Lambdawert Mischgas

## Patentansprüche

1. Abgasanlage (2) für einen Verbrennungsmotor (10), umfassend
eine erste, von einem Abgas des Verbrennungsmotors (10) durchströmbare Abgasreinigungseinrichtung (21, 23),
eine zweite, im Abgasströmungsweg stromab der ersten Abgasreinigungseinrichtung (21, 23) angeordnete, von dem Abgas durchströmbare Abgasreinigungseinrichtung (22),
einen im Abgasströmungsweg stromab der ersten Abgasreinigungseinrichtung (21, 23) und stromauf der zweiten Abgasreinigungseinrichtung (22) angeordneten Brenner (27), der eingerichtet ist, mit einem Brennstoff und einem oxidativen Gasstrom betrieben zu werden, um durch Verbrennung des Brennstoffs den Gasstrom zu erwärmen und der zweiten Abgasreinigungseinrichtung (24) zuzuführen, **dadurch gekennzeichnet, dass**
die zweite Abgasreinigungseinrichtung (22) ein Drei-Wege-Katalysator ist und eine elektrische Heizeinrichtung (28) zur Erwärmung des Drei-Wege-Katalysators aufweist, und
ein Vier-Wege-Katalysator (26) stromab des Drei-Wege-Katalysators angeordnet ist.

2. Abgasanlage (2) nach Anspruch 1, wobei die erste Abgasreinigungseinrichtung (21, 23) an einer motornahen Position angeordnet ist, insbesondere so, dass eine Abgaslauflänge zwischen Zylinderauslass des Verbrennungsmotors (10) und Eintrittsfläche der ersten Abgasreinigungseinrichtung (21, 23) höchstens 50 cm beträgt.

3. Abgasanlage (2) nach Anspruch 1 oder 2, wobei die zweite Abgasreinigungseinrichtung (22) an einer motorfernen Unterbodenposition angeordnet ist, insbesondere so, dass eine Abgaslauflänge zwischen Zylinderauslass des Verbrennungsmotors (10) und Eintrittsfläche in die zweite Abgasreinigungseinrichtung (22) mindestens 80 cm beträgt.

4. Abgasanlage (2) nach einem der vorhergehenden Ansprüche, wobei die erste Abgasreinigungseinrichtung ein weiterer Drei-Wege-Katalysator (21) oder ein weiterer Vier-Wege-Katalysator (23) ist.

5. Abgasanlage (2) nach einem der vorhergehenden Ansprüche, ferner umfassend
eine stromauf der ersten Abgasreinigungseinrichtung (21, 23) angeordnete Messeinrichtung (41) zur Messung eines Sauerstoffgehalts des Abgases und/oder
eine stromab der ersten Abgasreinigungseinrichtung (21, 23) und stromab des Brenners (27) angeordnete Messeinrichtung (42) zur Messung eines Sauerstoffgehalts des Abgases.

6. Abgasanlage (2) nach einem der vorhergehenden Ansprüche, ferner umfassend eine stromab des Brenners (27) und stromauf der zweiten Abgasreinigungseinrichtung (22) angeordnete Messeinrichtung (43) zur Messung eines Sauerstoffgehalts des Abgases und/oder eine stromab oder in der zweiten Abgasreinigungseinrichtung (22) angeordnete Messeinrichtung (44) zur Messung eines Sauerstoffgehalts des Abgases.

7. Abgasanlage (2) nach einem der vorhergehenden Ansprüche, wobei die elektrische Heizeinrichtung (29) der zweiten Abgasreinigungseinrichtung (22) eine vom Abgas durchströmbare Heizscheibe aufweist.

8. Abgasanlage (2) nach einem der vorhergehenden Ansprüche, ferner umfassend einen Partikelfilter (24), insbesondere Ottopartikelfilter, der stromab der ersten oder der zweiten Abgasreinigungseinrichtung (21, 22, 23) angeordnet ist.

9. Abgasanlage (2) nach einem der vorhergehenden Ansprüche, ferner umfassend einen Drei-Wege-Katalysator (25), der stromab der zweiten Abgasreinigungseinrichtung (22) angeordnet ist.

10. Verfahren zum Betreiben einer Abgasanlage (2) nach einem der Ansprüche 1 bis 9 bei Vorliegen eines Niedrigtemperaturzustands mit den Schritten:
Betreiben des Verbrennungsmotors (10) mit zumindest einer innermotorischen Maßnahme zur Anhebung der Abgastemperatur, und
gleichzeitiges oder zeitversetztes Aktivieren des Brenners (27) und der elektrischen Heizeinrichtung (28) der zweiten Abgasreinigungseinrichtung (22),
wobei der Verbrennungsmotor (10) und der Brenner (27) jeweils mit einem Lambdawert betrieben werden derart, dass ein in die zweite Abgasreinigungseinrichtung (22) eintretendes Mischgas stöchiometrisch 1 ist.

11. Verfahren nach Anspruch 10, wobei der Verbrennungsmotor (10) sowie der Brenner (27) jeweils mit einem stöchiometrischen Lambdawert betrieben werden.

12. Verfahren nach Anspruch 10, wobei der Verbrennungsmotor (10) mit einem fetten Lambdawert und der Brenner (27) mit einem mageren Lambdawert betrieben werden derart, dass das Mischgas stöchiometrisch ist.

## Claims

1. Exhaust gas system (2) for an internal combustion engine (10), comprising
a first exhaust gas purification device (21, 23) through which an exhaust gas of the internal combustion engine (10) can flow,
a second exhaust gas purification device (22) which is arranged in the exhaust gas flow path downstream of the first exhaust gas purification device (21, 23) and through which the exhaust gas can flow,
a burner (27) which is arranged in the exhaust gas flow path downstream of the first exhaust gas purification device (21, 23) and upstream of the second exhaust gas purification device (22) and which is designed to be operated using a fuel and an oxidative gas flow in order to heat the gas flow by combustion of the fuel and to feed it to the second exhaust gas purification device (24),
**characterized in that**
the second exhaust gas purification device (22) is a three-way catalytic converter and has an electrical heating device (28) for heating the three-way catalytic converter, and
a four-way catalytic converter (26) is arranged downstream of the three-way catalytic converter.

2. Exhaust gas system (2) according to claim 1, wherein the first exhaust gas purification device (21, 23) is arranged at a position close to the engine, in particular such that an exhaust gas path length between a cylinder outlet of the internal combustion engine (10) and an entry surface of the first exhaust gas purification device (21, 23) is at most 50 cm.

3. Exhaust gas system (2) according to claim 1 or claim 2, wherein the second exhaust gas purification device (22) is arranged at an underbody position remote from the engine, in particular such that an exhaust gas path length between the cylinder outlet of the internal combustion engine (10) and an entry surface into the second exhaust gas purification device (22) is at least 80 cm.

4. Exhaust gas system (2) according to any of the preceding claims, wherein the first exhaust gas purification device is a further three-way catalytic converter (21) or a further four-way catalytic converter (23).

5. Exhaust gas system (2) according to any of the preceding claims, further comprising
a measuring device (41) arranged upstream of the first exhaust gas purification device (21, 23) and intended for measuring an oxygen content of the exhaust gas and/or
a measuring device (42) arranged downstream of the first exhaust gas purification device (21, 23) and downstream of the burner (27) and intended for measuring an oxygen content of the exhaust gas.

6. Exhaust gas system (2) according to any of the preceding claims, further comprising a measuring device (43) arranged downstream of the burner (27) and upstream of the second exhaust gas purification device (22) and intended for measuring an oxygen content of the exhaust gas, and/or a measuring device (44) arranged downstream or in the second exhaust gas purification device (22) and intended for measuring an oxygen content of the exhaust gas.

7. Exhaust gas system (2) according to any of the preceding claims, wherein the electrical heating device (29) of the second exhaust gas purification device (22) has a heating disc through which the exhaust gas can flow.

8. Exhaust gas system (2) according to any of the preceding claims, further comprising a particulate filter (24), in particular a gasoline particulate filter, which is arranged downstream of the first or the second exhaust gas purification device (21, 22, 23).

9. Exhaust gas system (2) according to any of the preceding claims, further comprising a three-way catalytic converter (25) which is arranged downstream of the second exhaust gas purification device (22).

10. Method for operating an exhaust gas system (2) according to any of claims 1 to 9 in the presence of a low temperature state, the method comprising the steps of:
operating the internal combustion engine (10) with at least one engine-internal measure for raising the exhaust gas temperature, and
simultaneous or time-shifted activation of the burner (27) and the electrical heating device (28) of the second exhaust gas purification device (22),
wherein the internal combustion engine (10) and the burner (27) are each operated with a lambda value such that a mixed gas entering the second exhaust gas purification device (22) is stoichiometric 1.

11. Method according to claim 10, wherein the internal combustion engine (10) and the burner (27) are each operated with a stoichiometric lambda value.

12. Method according to claim 10, wherein the internal combustion engine (10) is operated with a rich lambda value and the burner (27) is operated with a lean lambda value such that the mixed gas is stoichiometric.

## Revendications

1. Installation de gaz d'échappement (2) pour un moteur à combustion interne (10), comprenant
un premier dispositif de purification de gaz d'échappement (21, 23) pouvant être traversé par un gaz d'échappement du moteur à combustion interne (10),
un second dispositif de purification de gaz d'échappement (22), agencé dans le chemin d'écoulement du gaz d'échappement en aval du premier dispositif de purification de gaz d'échappement (21, 23), pouvant être traversé par le gaz d'échappement,
un brûleur (27) agencé dans le chemin d'écoulement du gaz d'échappement en aval du premier dispositif de purification de gaz d'échappement (21, 23) et en amont du second dispositif de purification de gaz d'échappement (22), qui est conçu, pour être amené à fonctionner avec un combustible et un courant de gaz oxydant, afin de réchauffer le courant de gaz par combustion du combustible et pour l'alimenter au second dispositif de purification de gaz d'échappement (24),
**caractérisée en ce que**
le second dispositif de purification de gaz d'échappement (22) est un catalyseur à trois voies et présente un dispositif de chauffage électrique (28) pour le chauffage du catalyseur à trois voies et
un catalyseur à quatre voies (26) est agencé en aval du catalyseur à trois voies.

2. Installation de gaz d'échappement (2) selon la revendication 1, dans laquelle le premier dispositif de purification de gaz d'échappement (21, 23) est agencé au niveau d'une position proche du moteur, en particulier de sorte qu'une longueur de parcours de gaz d'échappement entre la sortie de cylindre du moteur à combustion interne (10) et la surface d'entrée du premier dispositif de purification de gaz d'échappement (21, 23) soit d'au plus 50 cm.

3. Installation de gaz d'échappement (2) selon la revendication 1 ou 2, dans laquelle le second dispositif de purification de gaz d'échappement (22) est agencé au niveau d'une position sous le plancher éloignée du moteur, en particulier de sorte qu'une longueur de parcours de gaz d'échappement entre la sortie de cylindre du moteur à combustion interne (10) et la surface d'entrée du second dispositif de purification de gaz d'échappement (22) soit d'au moins 80 cm.

4. Installation de gaz d'échappement (2) selon l'une quelconque des revendications précédentes, dans laquelle le premier dispositif de purification de gaz d'échappement est un autre catalyseur à trois voies (21) ou un autre catalyseur à quatre voies (23).

5. Installation de gaz d'échappement (2) selon l'une quelconque des revendications précédentes, comprenant en outre
un dispositif de mesure (41) agencé en amont du premier dispositif de purification de gaz d'échappement (21, 23) pour la mesure d'une teneur en oxygène du gaz d'échappement et/ou
un dispositif de mesure (42) agencé en aval du premier dispositif de purification de gaz d'échappement (21, 23) et en aval du brûleur (27) pour la mesure d'une teneur en oxygène du gaz d'échappement.

6. Installation de gaz d'échappement (2) selon l'une quelconque des revendications précédentes, comprenant en outre un dispositif de mesure (43) agencé en aval du brûleur (27) et en amont du second dispositif de purification de gaz d'échappement (22) pour la mesure d'une teneur en oxygène du gaz d'échappement et/ou un dispositif de mesure (44) agencé en aval du ou dans le second dispositif de purification de gaz d'échappement (22) pour la mesure d'une teneur en oxygène du gaz d'échappement.

7. Installation de gaz d'échappement (2) selon l'une quelconque des revendications précédentes, dans laquelle le dispositif de chauffage électrique (29) du second dispositif de purification de gaz d'échappement (22) présente un disque de chauffage pouvant être traversé par le gaz d'échappement.

8. Installation de gaz d'échappement (2) selon l'une quelconque des revendications précédentes, comprenant en outre un filtre à particules (24), en particulier un filtre à particules essence, qui est agencé en aval du premier ou du second dispositif de purification de gaz d'échappement (21, 22, 23).

9. Installation de gaz d'échappement (2) selon l'une quelconque des revendications précédentes, comprenant en outre un catalyseur à trois voies (25), qui est agencé en aval du second dispositif de purification de gaz d'échappement (22).

10. Procédé pour faire fonctionner une installation de gaz d'échappement (2) selon l'une des revendications 1 à 9 en présence d'un état de basse température, comportant les étapes suivantes :
fonctionnement du moteur à combustion interne (10) avec au moins une mesure interne au moteur pour augmenter la température de gaz d'échappement et
activation simultanée ou décalée dans le temps du brûleur (27) et du dispositif de chauffage (28) du second dispositif de purification de gaz d'échappement (22),
dans lequel le moteur à combustion interne (10) et le brûleur (27) sont amenés à fonctionner respectivement avec une valeur lambda, de sorte qu'un gaz mixte entrant dans le second dispositif de purification de gaz d'échappement (22) soit stoechiométriquement égal à 1.

11. Procédé selon la revendication 10, dans lequel le moteur à combustion interne (10) et le brûleur (27) sont amenés à fonctionner respectivement avec une valeur lambda stoechiométrique.

12. Procédé selon la revendication 10, dans lequel le moteur à combustion interne (10) est amené à fonctionner avec une valeur lambda enrichie et le brûleur (27) avec une valeur lambda maigre, de sorte que le gaz mixte soit stoechiométrique.
